# EUROPÄISCHE PATENTSCHRIFT

(11) **EP 1 978 843 B1**
(45) Veröffentlichungstag und Bekanntmachung des Hinweises auf die Patenterteilung: **30.03.2016**
(21) Anmeldenummer: 07704094.7
(22) Anmeldetag: 23.01.2007
(51) Int. Cl.: B60N 2/44, A47C 1/026

(54) **SCHWENKBESCHLAG**
PIVOTAL FITTING
FERRURE ROTATIVE

(30) Priorität: 31.01.2006 DE 202006001586 U; 21.12.2006 DE 202006019497 U
(43) Veröffentlichungstag der Anmeldung: 15.10.2008
(73) Patentinhaber: Hettich Franke GmbH & Co. KG, 72336 Balingen-Weilstetten (DE)
(72) Erfinder: DINSER, Thorsten, 72469 Meßstetten (DE)
(74) Vertreter: Dantz, Jan Henning
(86) Internationale Anmeldenummer: PCT/EP2007/050662
(87) Internationale Veröffentlichungsnummer: WO 2007/088128

(56) Entgegenhaltungen:
- EP-A- 1 284 447
- EP-A1- 0 769 409
- EP-A1- 0 960 765
- GB-A- 2 404 233

## Beschreibung

Die vorliegende Erfindung betrifft einen Schwenkbeschlag, insbesondere für Möbel, mit einer ersten Lasche und einer schwenkbar zu der ersten Lasche angeordneten zweiten Lasche, die über einen Klinkenmechanismus miteinander verbunden sind und in unterschiedlichen Winkelpositionen verrastbar sind.

Aus der EP 1 284 447 ist ein Schwenkbeschlag bekannt, bei dem zwei Laschen relativ zueinander um eine gemeinsame Achse drehbar sind. Die beiden Laschen können dabei über einen Rastmechanismus in unterschiedlichen Winkelpositionen verrastet werden. Hierfür sind zwei Sperrklinken vorgesehen, die über eine Feder nach außen zu einem Zahnring hin vorgespannt sind. Die Sperrklinken gewährleisten dabei in eine erste Drehrichtung einen Freilauf und können in die gegenüberliegende Richtung ein Einrasten in unterschiedlichen Winkelpositionen ermöglichen. Am Ende des Schwenkbereiches werden die Sperrklinken über eine Steuerscheibe außer Eingriff mit dem Zahnring gebracht und dann kann können die Laschen in eine gegenläufige Richtung bewegt werden. Nach Freigabe durch die Steuerscheibe können die Sperrklinken wieder in unterschiedlichen Winkelpositionen mit der Verzahnung in Eingriff gebracht werden. Nachteilig bei diesem Schwenkbeschlag ist, dass dieser nur in eine Richtung wirksam ist, das heißt ein Einrasten nur in einer Drehrichtung ermöglicht wird. Zudem ist die Einstellmöglichkeit bei den meisten Schwenkbeschlägen begrenzt.

Es ist daher Aufgabe der vorliegenden Erfindung einen Schwenkbeschlag zu schaffen, der einfach zu bedienen ist und in gegenläufige Richtungen wirksam sein kann, um für eine Vielzahl von Belastungsfällen und Anwendungen einsetzbar zu sein.

Diese Aufgabe wird durch einen Schwenkbeschlag mit den Merkmalen des Anspruches 1 gelöst.

Erfindungsgemäß wird die erste Lasche mit der zweiten Lasche über einen Klinkenmechanismus verbunden, der ein Verrasten in gegenläufige Richtungen ermöglicht. Dadurch können die Laschen relativ zueinander verschwenkt werden und können sowohl in die eine Schwenkrichtung als auch in die gegenläufige zweite Schwenkrichtung verrastet werden und eine entsprechende Belastung aufnehmen. Dies erweitert den Einsatzbereich des Schwenkbeschlages erheblich, da vorbekannte Schwenkbeschläge nur in eine Richtung belastbar bzw. rastbar sind. Der neue Schwenkbeschlag kann jedoch in unterschiedlichen Winkelpositionen verrastet werden und dabei entweder in eine erste Richtung oder in eine gegenläufige zweite Richtung gesichert sein. Dadurch lässt sich der Schwenkbeschlag beispielsweise an gegenüberliegenden Seiten eines Möbels verwenden und es müssen nicht "rechte" und "linke" Schwenkbeschläge bereit gehalten werden.

Gemäss der Erfindung ist die erste Lasche in eine erste Richtung relativ zu der zweiten Lasche verschwenkbar und dabei in einer Vielzahl von aufeinanderfolgenden Winkelpositionen verrastbar und in einer Endstellung ist der Klinkenmechanismus umschaltbar, wobei dann die erste Lasche in eine zur ersten Richtung gegenläufige zweite Richtung verschwenkbar ist und einer Vielzahl von aufeinanderfolgenden Winkelpositionen verrastbar ist. Der Schwenkbeschlag kann dadurch zwischen zwei Endstellungen der Laschen in einer Vielzahl von Winkelpositionen verrastet werden, wobei in einer Endstellung jeweils ein Umschalten erfolgt, so dass die Freilaufrichtung und die Sperrrichtung gewechselt werden.

Vorzugsweise umfasst der Klinkenmechanismus mindestens eine Wippe, die in einer ersten Position eine Bewegung der ersten Lasche relativ zu der zweiten Lasche in eine erste Richtung sperrt und in einer zweiten Position eine Bewegung der ersten Lasche relativ zu der zweiten Lasche in eine zur ersten Richtung gegenläufige zweite Richtung sperrt. Die Wippe kann dabei ein Umschalten des Klinkenmechanismus bewirken, damit dieser in der gewünschten Richtung wirksam ist. Dabei kann mindestens eine Wippe schwenkbar gelagert sein und mittels einer Feder in die erste oder zweite Position vorgespannt sein, so dass zumindest in eine Richtung eine Sperrwirkung durch die Wippe gewährleistet wird.

Die Wippe weist vorzugsweise zwei beabstandet voneinander angeordnete Zahnabschnitte auf, die jeweils in Eingriff mit einer Verzahnung eines Zahnkranzes bringbar sind. Dadurch kann je nach Position der Wippe ein Zahnabschnitt mit dem Zahnkranz in Eingriff sein und somit in eine Richtung einen Freilauf ermöglichen und in die gegenüberliegende Richtung eine Sperrwirkung entfalten. Der zweite Zahnabschnitt kann die entsprechende Funktion für die gegenläufige Richtung ermöglichen.

Gemäß einer weiteren Ausgestaltung der Erfindung weist der Klinkenmechanismus eine Steuerscheibe auf, mittels der mindestens eine Wippe von einer ersten Position in eine zweite Position verschwenkbar ist, und somit ein Umschalten der Richtung der Sperrwirkung bewirkt. Die Steuerscheibe kann dabei bis zu einem Anschlag verschwenkbar sein und dann die Wippe verschwenken, wobei die Position der Anschläge vorzugsweise einstellbar ist, um den Schwenkbereich der Laschen relativ zueinander verstellen zu können.

Vorzugsweise sind zwei verschwenkbare Wippen vorgesehen, die über eine gemeinsame Feder in die erste oder zweite Position vorgespannt sind. Die Feder kann dabei zwei Schenkel aufweisen, die jeweils an einer Außenseite einer Wippe anliegen, wobei die Wippe an der Außenseite profiliert sein kann, so dass der Schenkel der Feder in zwei benachbarte Aufnahmen einrasten kann um dann ein Verschwenken und Sichern der Wippe zu bewirken. Für die Bewegung der Feder kann diese durch Öffnungen der Steuerscheibe durchgeführt sein, so dass die Steuerscheibe und die Feder zusammen drehbar sind.

Gemäß einer weiteren Ausführungsform der Erfindung ist ein Klinkenmechanismus mit zwei Klinken vorgesehen, die wahlweise in Eingriff mit einer Zahnscheibe stehen, wobei eine Klinke eine Drehung der Zahnscheibe in eine erste Richtung freigibt und in eine gegenläufige zweite Richtung sperrt und die andere Klinke eine Drehung der Zahnscheibe in die erste Richtung sperrt und in die gegenläufige zweite Richtung freigibt. Die Klinken können dabei umgeschaltet werden, beispielsweise über eine Steuerscheibe, so dass bei kompakten Aufbau ein Verrasten des Schwenkbeschlages in gegenläufige Richtungen möglich ist.

Vorzugsweise sind dabei die beiden Klinken über einen Abstandshalter benachbart zu einem verzahnten Bereich auf einen Mindestabstand gehalten. Eine Klinke ist jeweils über eine Kontaktfläche an dem Abstandshalter außer Eingriff mit der Zahnscheibe gehalten, wobei diese Kontaktfläche jeweils im wesentlichen tangential an der Steuerscheibe angeordnet ist, so dass Kräfte im wesentlichen radial zu der Drehachse der Steuerscheibe wirken. Die andere mit der Zahnscheibe in Eingriff befindliche Klinke liegt an einer Anlagefläche an dem Abstandshalter an, wobei diese Anlagefläche im wesentlichen radial zu der Steuerscheibe ausgerichtet ist. Diese Anordnung gewährleistet, dass die nicht in Eingriff befindliche Klinke nicht versehentlich die Steuerscheibe verdreht, da diese Klinke im wesentlichen radial auf die Steuerscheibe wirkt.

Gemäß einer weiteren Ausgestaltung der Erfindung sind die Laschen zwischen zwei Endstellungen relativ zueinander drehbar, wobei ein Endanschlag jeweils durch eine Klinke bereitgestellt wird, die nach dem Umstellen durch die Steuerscheibe in Eingriff mit der Zahnscheibe gehalten ist. Dadurch kann beim Umstellen durch die Steuerscheibe eine Verrastung an der Zahnscheibe gleich als Endanschlag für die Laschen genutzt werden.

Die Erfindung wird nachfolgend anhand von zwei Ausführungsbeispielen mit Bezug auf die beigefügten Zeichnungen näher erläutert. Es zeigen:
- Figur 1: eine Explosionsdarstellung eines ersten Ausführungsbeispieles eines erfindungsgemäßem Schwenkbeschlages;
- Figur 2: eine perspektivische Ansicht des zusammengesetzten Schwenkbeschlages der Figur 1;
- Figur 3: eine perspektivische Ansicht des Schwenkbeschlages der Figur 1;
- Figur 4: eine perspektivische Ansicht einer modifizierten Ausgestaltung des Schwenkbeschlages der Figur 1;
- Figur 5: eine Draufsicht auf den Schwenkbeschlag der Figur 1;
- Figur 6: eine geschnittene Detailansicht entlang der Linie A/A der Figur 5;
- Figur 7: eine geschnittene Detailansicht entlang der Linie B/B der Figur 5;
- Figur 8: eine Draufsicht auf den Rastmechanismus des Schwenkbeschlages der Figur 1;
- Figur 9: eine Unteransicht des Rastmechanismus des Schwenkbeschlages der Figur 1;
- Figur 10: eine Draufsicht auf den Rastmechanismus während des Verstellens;
- Figur 11: eine Unteransicht auf den Rastmechanismus während des Verstellens;
- Figur 12: eine vergrößerte Detailansicht des Rastmechanismus der Figur 11;
- Figur 13: eine Draufsicht auf den Rastmechanismus nach dem Verstellen;
- Figur 14: eine Unteransicht auf den Rastmechanismus nach dem Verstellen;
- Figur 15: eine perspektivische Ansicht eines Schwenkbeschlages nach einem zweiten Ausführungsbeispiel;
- Figur 16: eine Explosionsdarstellung des Schwenkbeschlages der Figur 15;
- Figur 17A, 17B: zwei Detailansichten des Rastmechanismus Schwenkbeschlages der Figur 15;
- Figur 18: eine Detailansicht des Rastmechanismus des Schwenkbeschlages der Figur 15 nach dem Umstellen;
- Figur 19A, 19B: zwei Detailansichten des Rastmechanismus Schwenkbeschlages der Figur 15;
- Figur 20: eine Detailansicht des Rastmechanismus des Schwenkbeschlages der Figur 15 nach dem Umstellen;
- Figur 21: eine Draufsicht auf den Schwenkbeschlag der Figur 15, und
- Figur 22: eine Schnittansicht durch den Schwenkbeschlag der Figur 21 entlang der Line A-A.

Ein Schwenkbeschlag, insbesondere für Möbel oder andere verstellbare Bauelemente, umfasst eine erste Lasche 11, die relativ zu einer zweiten Lasche 8 drehbar ist. Die erste Lasche 11 weist dabei einen Ausleger 17 auf, an dem weitere Bauteile festgelegt werden können. An der Lasche 11 ist ferner ein Zahnkranz 19 ausgebildet, der mit einem Klinkenmechanismus zusammenwirkt, um die Schwenkbewegung der zweiten Lasche 8 relativ zu der ersten Lasche zu ermöglichen, wobei in unterschiedlichen Winkelstellungen ein Einrasten erfolgt und die Laschen 8 und 11 in jeweils eine Richtung jeweils gesperrt sind und in eine gegenläufige Drehrichtung bewegbar sind. Auch die zweite Lasche 8 umfasst einen radial hervorstehenden Ausleger 80, an dem Öffnungen 81 zur Befestigung von Bauteilen vorgesehen sind. An der zweiten Lasche ist ferner ein profilierter Zahnring 82 ausgebildet, in den ein Klinkenträger 7 in der gewünschten Winkelposition festgelegt werden kann. Hierfür weist der Klinkenträger 7 ein profiliertes Zahnrad 70 auf, das klemmend an dem Zahnring 82 festlegbar ist.

Der Rastmechanismus umfasst zwei Wippen 12, die jeweils über einen Stift 10 drehbar gelagert sind. Der Stift 10 kann dabei auch integral mit der Wippe 12 ausgebildet sein. Die Wippen 12 sind dabei um einen Zentralniet 13 angeordnet und außenseitig von dem Zahnkranz 19 der ersten Lasche 11 umgeben.

Die Stifte 10 greifen ferner in eine Klinkenplatte 6 ein, die über eine Feder 3 mit einer Steuerscheibe 9 gekoppelt ist. Der Rastmechanismus ist dabei von einem Deckel 2 und einem unterem Gehäuse 1 umgeben. Das Gehäuse 1 ist über Nieten 4 mit dem Deckel 2 verbunden, wobei die Nieten 4 in Öffnungen 18 an dem Ausleger 17 der ersten Lasche 11 eingreifen.

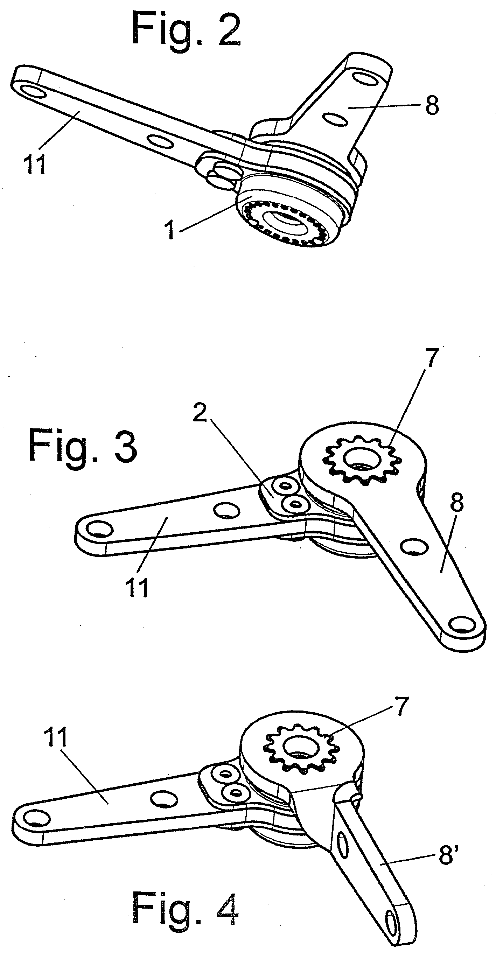

In den Figuren 2 und 3 ist der Schwenkbeschlag in der zusammengesetzten Position gezeigt und es ist erkennbar, dass die hervorstehenden Ausleger der Laschen 8 und 11 relativ zueinander bewegt werden können.

In Figur 4 ist eine modifizierte Ausführungsform der zweiten Lasche 8' gezeigt, die in diesem Fall gedreht ausgebildet ist, so dass die Bauteile mit entsprechenden Öffnungen an dem Ausleger der Lasche 8' verbunden werden können.

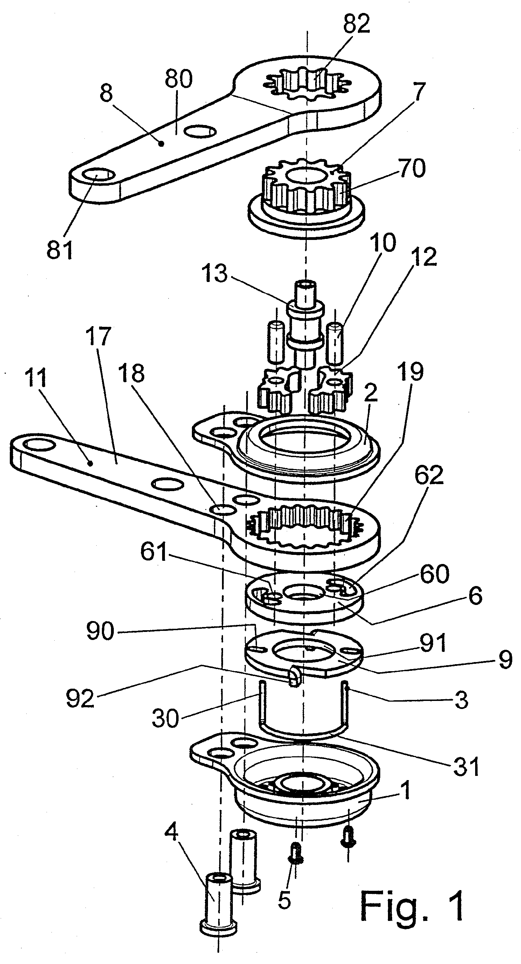

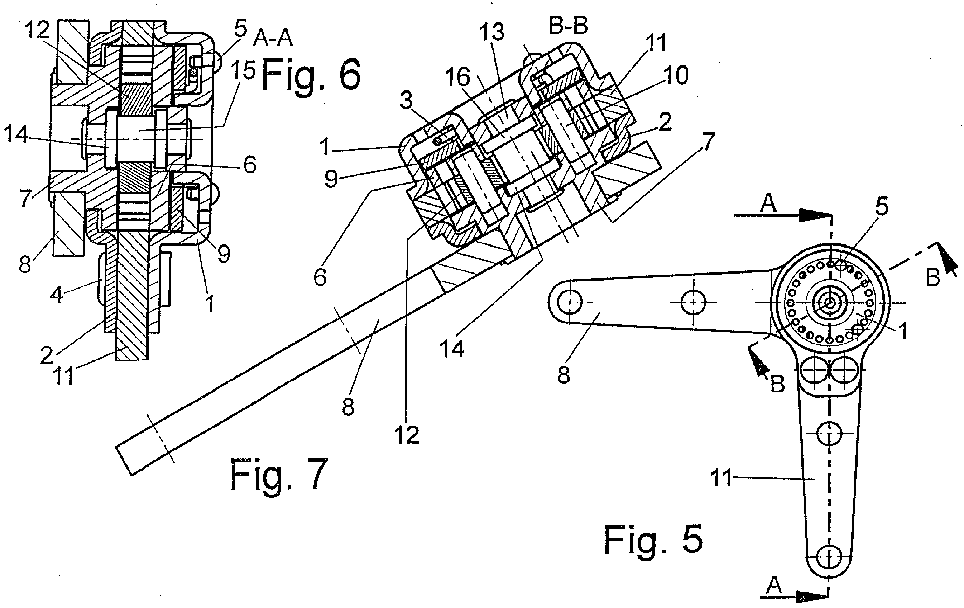

In Figur 5 ist der Schwenkbeschlag der Figur 1 in einer Ansicht von unten gezeigt, wobei die Position der einzelnen Bauteile anhand der Schnittdarstellungen der Figuren 6 und 7 zu erkennen ist.

Der Zentralniet 13 bildet eine zentrale Drehachse aus, wobei diese an einer Seite an einer mittigen Öffnung in dem Klinkenträger 7 festgelegt ist. An dem Zentralniet 13 ist ein radial hervorstehender Ring 14 vorgesehen, sowie ein radial hervorstehender Ring 16, zwischen denen ein zylindrischer Mittelabschnitt 15 ausgebildet ist. An dem Mittelabschnitt 15 sind die Wippen 12 angeordnet, die an den Stiften 10 drehbar gelagert sind. Die Stifte 10 greifen dabei auf einer Seite an Öffnungen in dem Klinkenträger 7 ein und sind an der gegenüberliegenden Seite in Öffnungen 61 der Klinkenplatte 6 gelagert. Die Klinkenplatte 6 umgibt mit einer mittigen Öffnung 60 den Ring 16 an dem Zentralniet 13.

Benachbart zu der Klinkenplatte 6 ist die Steuerscheibe 9 angeordnet, die über eine Feder 3 mit der Klinkenplatte 6 gekoppelt ist. Die Feder 3 weist einen Bügelabschnitt 31 und zwei parallel zu dem Zentralniet 13 angeordnete Schenkel 30 auf, die endseitig an den Wippen 12 anliegen.

An dem Gehäuse 1 sind ferner zwei Kerbnägel 5 angeordnet, die die Drehbewegung der Steuerscheibe 9 begrenzen und somit den Verstellweg der Laschen 8 und 11 vorgeben. Die Kerbnägel 5 können dabei in unterschiedliche Öffnungen an dem Gehäuse 1 eingesetzt werden, um eine Verstellung des Schwenkbeschlages vorzunehmen. Durch den Einsatz der Kerbnägel 5 ist es möglich, den Schwenkbereich auch noch nach Montage des Schwenkbeschlages einzustellen.

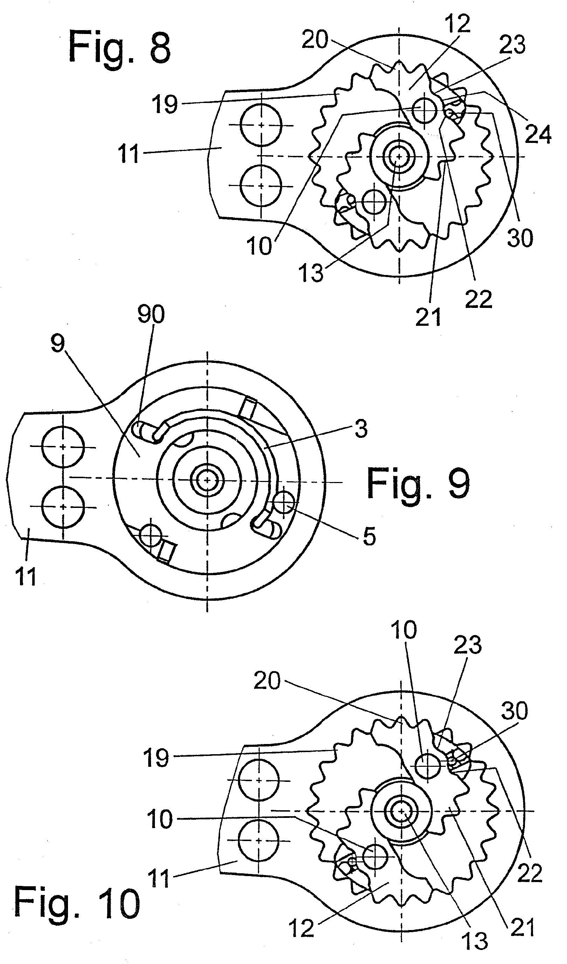

In den Figuren 8 und 9 ist der Rastmechanismus des Schwenkbeschlages der Figur 1 in einer ersten Position gezeigt, wobei angenommen wird, dass die erste Lasche 11 stationär angeordnet ist und die zweite Lasche 8 relativ dazu verschwenkbar ist. In der gezeigten Position ist eine Bewegung der Lasche 8 im Uhrzeigersinn möglich, in die Gegenrichtung ist die Lasche 8 gesperrt. Hierfür sind die Wippen 12 mit zwei voneinander beabstandeten Zahnabschnitten 20 und 21 versehen, wobei in der gezeigten Position der Zahnabschnitt 20 mit dem Zahnkranz 19 in Eingriff ist. Die Wippe 12 ist dabei durch den Schenkel 30 in Uhrzeigerrichtung vorgespannt, so dass eine Bewegung der Wippe 12 in Uhrzeigerrichtung möglich ist, in die gegenüberliegende Richtung aber der Zahnabschnitt 20 die Bewegung sperrt. Die auf der zu dem Zentralniet 13 gegenüberliegend angeordnete Wippe 12 klemmt ebenfalls mit dem Zahnkranz 19 und sperrt diesen in eine Richtung gegen den Uhrzeigersinn.

In Figur 9 ist ersichtlich, dass die Feder 3 mit ihren Schenkeln 30 in eine Öffnung 90 an der Steuerscheibe 9 eingreift und ferner die Bolzen der Kerbnägel 5 zu sehen sind, die in der gezeigten Stellung jedoch keine Funktion besitzen.

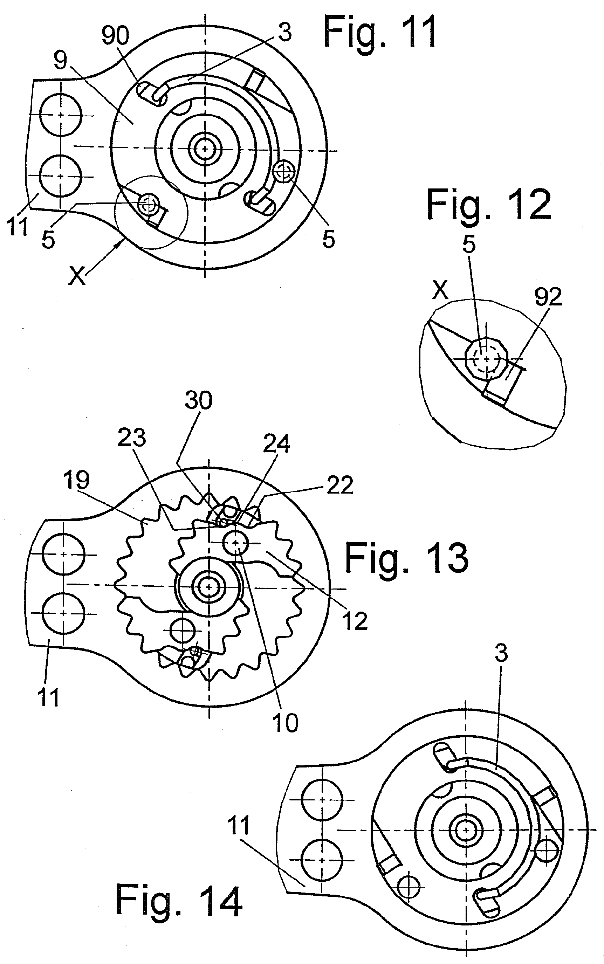

Wenn die Lasche 8 weiter geschwenkt wird, bewegen sich die Wippen 12 aufgrund der Verzahnung 19 im Uhrzeigersinn, wobei hier eine Position gezeigt ist, in der die Wippen 12 gerade umgeschaltet werden. Hierfür wird ein Schenkel 30 der Feder 3 von der Aufnahme 22 an der radial äußeren Seite der Wippe 12 über eine Erhebung 24 zu einer zweiten Aufnahme 23 bewegt. Dies erfolgt dadurch, dass die Steuerscheibe 9 bis zu einem Anschlag gedreht wird, der durch einen Kerbnagel 5 gebildet ist. Dabei liegt eine abstehende Lasche 92 der Steuerscheibe 90 an dem Kerbnagel 5 an, so wie dies in der vergrößerten Darstellung der Figur 12 gezeigt ist. Da die Feder 3 mit ihren Schenkeln 30 in Öffnungen 90 der Steuerscheibe 9 eingreift, kann sich die Feder 3 ebenfalls nicht weiter drehen. Allerdings wird die benachbarte Klinkenplatte 6 aufgrund der Kopplung durch die Stifte 10 noch etwa um 10° bis 15° weiter gedreht, so dass die Schenkel 30 der Feder 3 auf der äußeren Umfangsfläche der Wippen 12 von der Aufnahme 22 über die Erhebung 24 in die Aufnahme 23 gleiten. Die Geometrie an der radial äußeren Seite der Wippen 12 gibt dabei das Umschaltverhalten vor, das je nach Ausgestaltung weich (niedrige Erhebung) oder härter mit fühlbarem Rasten (höhere Erhebung) ausgestaltet sein kann. Auch der Umschaltweg kann für den jeweiligen Einsatzzweck angepasst sein.

In Figur 13 und 14 ist die Position dargestellt, bei denen ein Umschalten der Wippe 12 stattgefunden hat und die Feder 30 die Wippen 12 radial nach innen drückt, wobei ein Schenkel 30 in der Aufnahme 23 angeordnet ist und somit die Wippe 12 um die durch den Stift 10 gebildete Achse verschwenkt wurde. In dieser Position ist die Verzahnung 21 in Eingriff mit dem Zahnkranz 19, so dass eine Bewegung gegen den Uhrzeigersinn freigegeben wird und eine Sperrwirkung in die gegenüberliegende Drehrichtung vorhanden ist. Nun kann die zweite Lasche 8 in eine Richtung gegen den Uhrzeigersinn gedreht werden, bis über den zweiten Kerbnagel 5 ein Umschalten der beiden Wippen 12 stattfindet, so dass diese wieder in die gegenläufige Richtung wirksam sind.

In dem gezeigten Ausführungsbeispiel sind etwa Rastklinken alle 15° durch entsprechende Zähne an dem Zahnkranz 19 und den Wippen 12 gebildet. Es ist natürlich möglich, die Rastung feiner oder gröber einzustellen, so dass in Winkelbereichen zwischen 10° und 20° oder in anderen Winkelbereichen ein Einrasten erfolgt. Ferner sind in dem dargestellten Ausführungsbeispiel zwei Wippen 12 um den Zentralniet 13 angeordnet. Es ist natürlich auch möglich nur eine Wippe 12 oder mehr als zwei Wippen 12 vorzusehen.

Statt der gezeigten Feder 3 kann natürlich auch jede Wippe 12 über eine eigene Feder in die gewünschte Richtung vorgespannt sein. Auch der Umschaltmechanismus kann durch andere mechanische Bauteile realisiert werden.

Der gezeigte Schwenkbeschlag ist insbesondere auch gut für Polstermöbel einsetzbar, da die zueinander bewegbaren Bauteile geschützt in dem Gehäuse 1 und dem Deckel 2 angeordnet sind und eine Abdichtung gegenüber Polsterschaum vorhanden ist. Ferner lassen sich die Bauteile für den Schwenkbeschlag schnell montieren.

Bei dem gezeigten Ausführungsbeispiel werden zur Einstellung des Schwenkbeschlages Kerbnägel 5 eingesetzt, die in entsprechende Öffnungen an dem Gehäuse 1 eingesetzt werden. Es ist natürlich auch möglich, statt der kreisförmigen Öffnungen Schlitze vorzusehen, in die dann entsprechende Anschläge zur Begrenzung der Schwenkbewegung montiert werden.

Die Kerbnägel 5 bilden Anschläge für die Steuerscheibe 9 aus, deren Drehbewegung begrenzt wird. Statt der Kerbnägel 5 ist es auch möglich, das Gehäuse 1 zu profilieren, beispielsweise mit einer Einkerbung oder einer Noppe zu versehen, die dann als Anschlag wirkt. Ferner können auch Laschen an dem Gehäuse 1 ausgebildet werden. Das Eindrücken der Einkerbungen, Noppen oder Laschen kann am Ende der Montage des Schwenkbeschlages erfolgen, um die maximale Schwenkbewegung zu begrenzen. Dabei kann auch die Anfangsstellung der beiden Laschen 8 und 11 zueinander vorgegeben werden, damit diese dann aus dieser Anfangsstellung relativ zueinander verschwenkt werden können. Ein Anschlag bildet daher die Begrenzung für diese Anfangsstellung, die auch noch nach der Montage des Schwenkbeschlages vorgegeben werden kann. Es ist dabei zumindest ein Anschlag bzw. Kerbnagel 5 notwendig, der dann einen Umschaltpunkt für einen maximalen Schwenkbereich der Laschen 8 und 11 bildet.

Die Anfangsstellung der Lasche 8 kann auch durch Festlegen der Lasche 8 an dem Klinkenträger 7 vorgegeben werden, wobei der Zahnring 82 in der gewünschten Winkelstellung auf das Zahnrad 70 gepresst wird.

Die Wippen 12 können in der gezeigten Ausführungsform je nach ihrer Position in beide Richtungen sperren. Es ist natürlich auch möglich, die Wippen 12 so auszugestalten, dass sie jeweils nur in eine Richtung eine Sperrwirkung besitzen und in die gegenüberliegende Richtung ein Freilauf vorhanden ist. Beispielsweise könnte nur ein Zahnabschnitt 20 oder 21 vorhanden sein und zwei Wippen so angeordnet sein, dass jeweils ein Wippe im Freilauf ist, während die andere Wippe eine Sperrwirkung entfaltet.

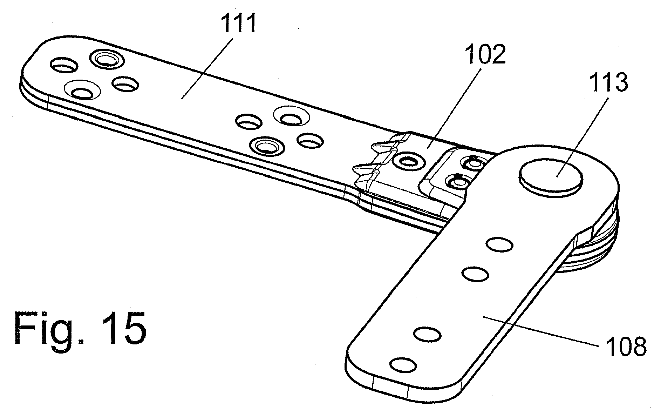

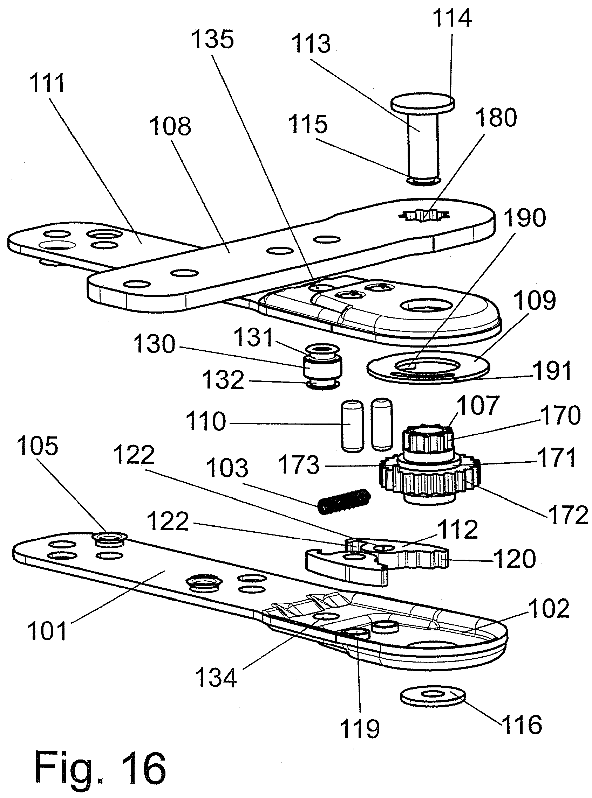

In den Figuren 15 bis 20 ist ein zweites Ausführungsbeispiel eines erfindungsgemäßen Schwenkbeschlages dargestellt.

Der Schwenkbeschlag umfasst eine erste Lasche 111, die relativ zu einer zweiten Lasche 108 drehbar ist. Die erste Lasche 111 und die zweite Lasche 108 weisen jeweils einen Ausleger zur Befestigung weiterer Bauteile auf. Die erste Lasche 111 ist zweiteilig ausgebildet und umfasst ein Gehäuseabschnitt 102 mit einem Hohlraum zwischen den beiden Teilen und einen Auslegerabschnitt 101, an dem die beiden Teile der ersten Lasche 111 direkt aufeinander durch Nieten 105 oder andere Befestigungsmittel festgelegt sind.

An der zweiten Lasche 108 ist ein Zahnkranz 180 ausgebildet, der über einen Klinkenmechanismus mit der ersten Lasche 111 gekoppelt ist. Über den Klinkenmechanismus kann eine Schwenkbewegung der zweiten Lasche 108 relativ zu der ersten Lasche 111 erfolgen, wobei in unterschiedlichen Winkelstellungen ein Einrasten möglich ist und die Laschen 108 und 111 in jeweils eine Drehrichtung gesperrt und in eine gegenläufige Drehrichtung bewegbar sind. Die Sperr- und Freilaufrichtung kann jedoch in einer Endstellung umgeschaltet werden.

Der Klinkenmechanismus umfasst ein Zahnrad 107, das zur drehfesten Verbindung mit der zweiten Lasche 108 in den Zahnkranz 180 eingesteckt ist. Das Zahnrad 107 weist einen ringförmigen Abschnitt 171 und benachbart dazu eine Zahnscheibe 172 auf, die mit ein oder mehreren Zähnen 120 von zwei Klinken 112 in Eingriff bringbar ist. Die zwei Klinken 112 sind drehbar an einem Gehäuse 102 festgelegt. Hierfür ist an der Innenseite des Gehäuses 102 für zwei Bolzen 110 jeweils eine Aufnahme 119 zum Einstecken der Bolzen 110 vorgesehen. Die Bolzen 110 durchgreifen eine Öffnung 121 in einer Klinke 112, so dass jede Klinken 112 um jeweils einen Bolzen 110 drehbar gelagert ist. Auf der zu den Zähnen 120 der Klinken 112 gegenüberliegenden Seite ist an jeder Klinke 112 eine Aufnahme 122 ausgebildet in die ein Endabschnitt einer Feder 103 gehalten ist, wobei die Feder als Druckfeder ausgebildet ist und die Klinken 112 mit den Zähnen 120 zu der Zahnscheibe 172 hin vorspannt.

In dem Bereich des Gehäuses 102 ist ferner ein Abstandsniet 130 vorgesehen, der Öffnungen 134 und 135 in einer Gehäusewand der ersten Lasche 111 durchgreift. Der Abstandsniet 130 umfasst zwei beabstandet angeordnete Nuten 131 und 132, an denen jeweils eine Gehäusewand festgelegt ist.

In dem Gehäuseabschnitt 102 ist ferner noch eine Steuerscheibe 109 vorgesehen, um die beiden Klinken 112 so zu schalten, dass jeweils nur eine Klinke 112 in Eingriff mit der Zahnscheibe 172 ist. Hierfür weist die Steuerscheibe 109 eine Abstandshalter 190 in Form eines abgewinkelten Steges auf, er zwischen den Klinken 112 angeordnet ist. Die Steuerscheibe 109 weist ferner ein Langloch 191 auf, in das ein Mitnehmer 173 an der Zahnscheibe 172 eingreift. Die Länge des Langloches 191 kann je nach maximalem Schwenkbereich gewählt werden, d.h. je länger das Langloch 191 desto größer der Schwenkbereich.

Die Laschen 108 und 111 werden zudem über einen Bolzen 113 aneinander gehalten, der auf einer Seite einen verdickten Kopfabschnitt 114 und an der gegenüberliegenden Seite eine Nut 115 aufweist, an der eine Haltescheibe 116 festgelegt ist, so dass die Laschen 108 und 111 zwischen dem Kopfabschnitt 114 und der Haltescheibe 116 angeordnet sind. An einem zylindrischen Abschnitt des Bolzens 113 ist ferner das Zahnrad 107 und die Zahnscheibe 172 drehbar gelagert.

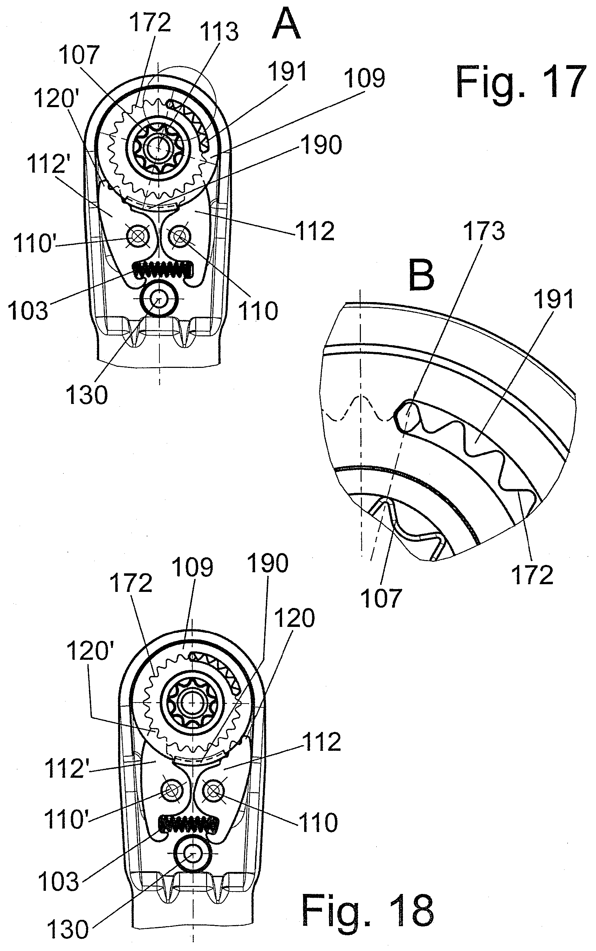

Die Funktion des Schenkbeschlages wird nachfolgend anhand der Figuren 17 bis 20 erläutert:
In Figur 17A befindet sich die rechte Klinke 112 mit ihren Zähnen 120 in Eingriff mit der Zahnscheibe 172. Die auf der linken Seite angeordnete Klinke 112' ist mit ihren Zähnen 120' außer Eingriff von der Zahnscheibe 172, wobei der Abstandshalter 190 so angeordnet ist, dass ein Eingriff der linken Klinke 112' verhindert wird. Die Klinke 112 mit ihren Zähnen 120 ist dabei so ausgebildet, dass die Zahnscheibe 172 gegen den Uhrzeigersinn frei drehen kann, wobei die Klinke 112 nach außen verschwenken kann. Durch die Feder 103 wird die Klinke 112 nach jedem Zahn der Zahnscheibe 107 wieder in Eingriff mit der Zahnscheibe 172 gedrückt. In die gegenüberliegende Richtung im Uhrzeigersinn ist die Zahnscheibe 172 durch die Klinke 112 gesperrt.

Das Drehen der Zahnscheibe 172 gegen den Uhrzeigersinn kann solange erfolgen, bis die in Figuren 17A und 17B gezeigte Position erreicht ist, in der der Mitnehmer 173 an der Zahnscheibe 172 das ein Ende des Langloches 191 an der Steuerscheibe 109 erreicht hat. Wird nun die Zahnscheibe 172 weiter gegen den Uhrzeigersinn gedreht, bewegt der Mitnehmer 173 die Steuerscheibe 109 ebenfalls gegen den Uhrzeigersinn, so dass der Abstandshalter 190 an der Steuerscheibe 109 die rechte Klinke 112 außer Eingriff mit der Zahnscheibe 172 drückt und gleichzeitig aufgrund der Kraft der Feder 103 die linke Klinke 112' in Eingriff mit der Zahnscheibe 172 gebracht wird.

Wie in Figur 17B zu sehen ist, besitzt die Steuerscheibe 109 ein Langloch 191, in der ein Mitnehmer 173 angeordnet ist. Der Mitnehmer 173 ist integral mit der Zahnscheibe 172 ausgebildet. Wird der Mitnehmer 173 weiter gegen den Uhrzeigersinn gedreht, verstellt sich die Steuerscheibe 109 und die in Figur 18 gezeigte Position wird erreicht.

In dieser Position ist die Steuerscheibe 109 so weit fixiert, dass sie nicht durch die Kraft der rechten Klinke 112 bewegt werden kann. Dabei ist die Anlagefläche zwischen der rechten Klinke 112 und dem Abstandshalter 190 der Steuerscheibe 109 so gestaltet, dass sie im wesentlichen radial zur Drehachse der Steuerscheibe 109 wirkt. Die Steuerscheibe 109 wird daher durch die beiden Klinken 112 und 112' in einer entsprechenden Endstellung gehalten.

Die Steuerscheibe 109 wurde in der in Figur 18 gezeigten Position umgestellt und der Abstandshalter 190 drückt nun die rechte Klinke 112 außer Eingriff mit der Zahnscheibe 172. Durch Drehen des Abstandshalters 190 wird ferner die linke Klinke 112' aufgrund der Kraft der Feder 103 gegen die Zahnscheibe 172 gedrückt, so dass die Zähne 120' in Eingriff mit der Zahnscheibe 172 gelangen. Die Zahnscheibe 172 kann nun im Uhrzeigersinn gedreht werden, wobei die Klinke 112' um die Achse 110' nach außen verschwenkt werden kann. Nach jedem Zahn wird die Klinke 112' jedoch wieder in Eingriff mit der Zahnscheibe 172 aufgrund der Kraft der Feder 103 gebracht.

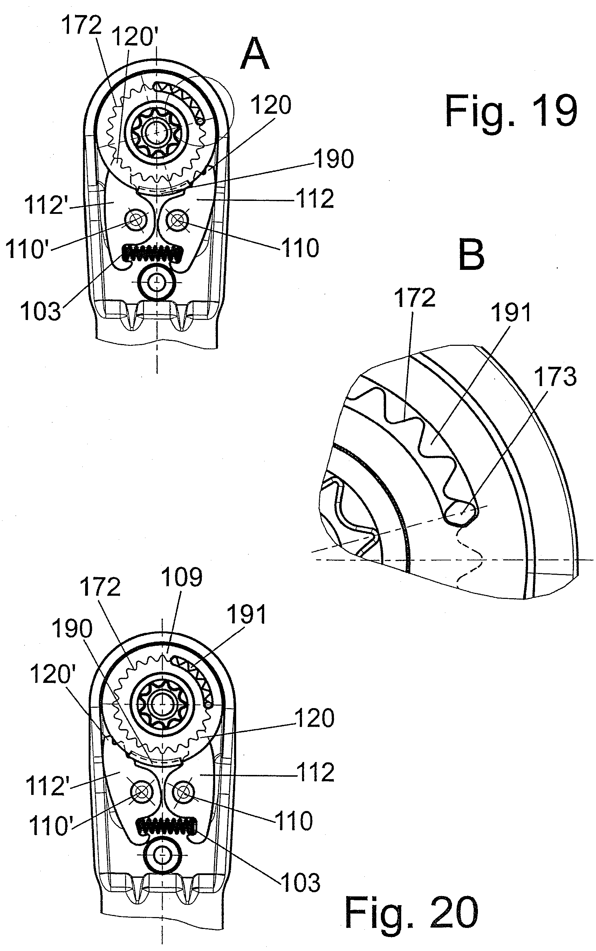

Das Drehen der Zahnscheibe 172 im Uhrzeigersinn kann solange erfolgen, bis die in Figuren 19A und 19B gezeigte Position erreicht ist, in der der Mitnehmer 173 an der Zahnscheibe 172 das gegenüberliegende Ende des Langloches 191 an der Steuerscheibe 109 erreicht hat. Wird nun die Zahnscheibe 172 weiter im Uhrzeigersinn gedreht, bewegt der Mitnehmer 173 die Steuerscheibe 109 ebenfalls im Uhrzeigersinn, so dass der Abstandshalter 190 an der Steuerscheibe 109 die linke Klinke 112' außer Eingriff mit der Zahnscheibe 172 drückt und gleichzeitig aufgrund der Kraft der Feder 103 die rechte Klinke 112 in Eingriff mit der Zahnscheibe 172 gebracht wird.

Dadurch wird die in Figur 20 gezeigte Position erreicht, bei der der Rastmechanismus wieder umgeschaltet ist. Nun ist wieder die rechte Klinke 112 in Eingriff mit der Zahnscheibe 172 und die linke Klinke 112' ist außer Eingriff. Die Zahnscheibe 172 kann nun wieder gegen den Uhrzeigersinn frei gedreht werden, während eine Drehung der Zahnscheibe 172 in Uhrzeigerrichtung gesperrt ist.

Durch den Anschlag des Mitnehmers 173 am Ende des Langloches 191 der Steuerscheibe 109 und den daraus resultierende Anschlag einer der Klinken 112 oder 112' wird auch ein Anschlag für die Schwenkbewegung der Laschen 108 und 111 bereitgestellt. Die Länge des Langloches 191 gibt somit den maximalen Schwenkweg der Laschen 108 und 111 vor. Durch Auswechseln der Steuerscheibe 109 durch eine andere Steuerscheibe mit längerem oder kürzerem Langloch 191 kann der maximale Verstellweg der Laschen 108 und 111 modifiziert werden.

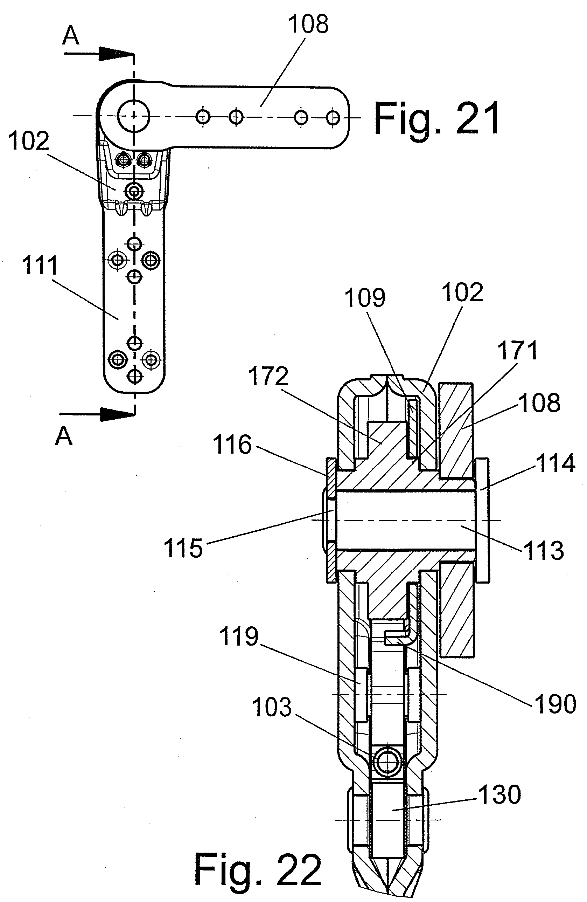

In den Figuren 21 und 22 ist der Schwenkbeschlag in der montierten Position gezeigt. Um den Bolzen 113 ist die Zahnscheibe 172 angeordnet, die integral mit dem Zahnrad 107 ausgebildet ist. In axiale Richtung sind die Laschen 108 und der Gehäuseabschnitt 102 der Lasche 111 mit leichtem Spiel angeordnet, so dass sie leichtgängig gedreht werden können. Sämtliche Bauteile des Rastmechanismusses sind dabei innerhalb des Gehäuseabschnittes 102 geschützt angeordnet. Die Steuerscheibe 109 greift mit dem abgewinkelten Steg als Abstandshalter 190 dabei zwischen die Klinken 112 und 112'.

In dem dargestellten Ausführungsbeispiel sind die Klinken 112 und 112' über eine Druckfeder 103 zu der Zahnscheibe 172 hin vorgespannt. Es ist natürlich auch möglich, statt der Druckfeder eine Zugfeder vorzusehen oder für jede Klinke 112 und 112' eine eigene Feder vorzusehen.

Die Klinken 112 greifen jeweils mit zwei Zähnen in die Zahnscheibe 172 ein. Es ist natürlich auch möglich, nur einen Zahn in die Zahnscheibe 172 eingreifen zu lassen. Ferner können auch mehrere Zähne in die Zahnscheibe 172 eingreifen, so dass eine besonders große Kraftaufnahme möglich ist.

Die Verrastung der Klinken 112 und 112' kann so erfolgen, dass alle 10° bis 20°, vorzugsweise etwa 15° ein Einrasten erfolgt. Dadurch kann bei kompaktem Aufbau eine feine Rastung erhalten werden.

## Patentansprüche

1. Schwenkbeschlag, insbesondere für Möbel, mit einer ersten Lasche (11; 111) und einer schwenkbar zu der ersten Lasche (11; 111) angeordneten zweiten Lasche (8; 108), die über einen Klinkenmechanismus (12, 19; 112, 172) miteinander verbunden sind und in unterschiedlichen Winkelpositionen verrastbar sind, **dadurch gekennzeichnet, dass** der Klinkenmechanismus (12, 19; 112, 172) ein Verrasten in gegenläufige Richtungen ermöglicht, wobei die erste Lasche (11; 111) in einer ersten Richtung relativ zu der zweiten Lasche (8; 108) verschwenkbar ist und dabei in eine Vielzahl von aufeinanderfolgenden Winkelpositionen verrastbar ist und in einer Endstellung der Klinkenmechanismus (12, 19; 112, 172) umschaltbar ist und die erste Lasche (11; 111) in eine zur ersten Richtung gegenläufige zweite Richtung verschwenkbar ist und an einer Vielzahl von aufeinanderfolgenden Winkelpositionen verrastbar ist.

2. Schwenkbeschlag nach Anspruch 1, **dadurch gekennzeichnet, dass** der Klinkenmechanismus mindestens eine Wippe (12) umfasst, die in einer ersten Position eine Bewegung der ersten Lasche (11) relativ zu der zweiten Lasche in eine erste Richtung sperrt und in einer zweiten Position eine Bewegung der ersten Lasche (11) relativ zu der zweiten Lasche (8) in eine zur ersten Richtung gegenläufige zweite Richtung sperrt.

3. Schwenkbeschlag nach Anspruch 2, **dadurch gekennzeichnet, dass** die mindestens eine Wippe (12) schwenkbar gelagert ist und mittels einer Feder (3) in die erste oder zweite Position vorgespannt ist.

4. Schwenkbeschlag nach Anspruch 2 oder 3, **dadurch gekennzeichnet, dass** die mindestens eine Wippe (12) zwei beabstandet voneinander angeordnete Zahnabschnitte (20, 21) aufweist, die jeweils in Eingriff mit einer Verzahnung (19) eines Zahnkranzes bringbar sind.

5. Schwenkbeschlag nach einem der Ansprüche 1 bis 4, **dadurch gekennzeichnet, dass** der Klinkenmechanismus eine Steuerscheibe (9) aufweist, mittels der die mindestens eine Wippe (12) von einer ersten Position in eine zweite Position verschwenkbar ist.

6. Schwenkbeschlag nach einem der Ansprüche 1 bis 5, **dadurch gekennzeichnet, dass** zwei verschwenkbare Wippen (12) vorgesehen sind, die über eine Feder (3) in die erste oder zweite Position vorgespannt sind.

7. Schwenkbeschlag nach Anspruch 6, **dadurch gekennzeichnet, dass** die Feder (3) zwei Schenkel (30) aufweist, die jeweils an einer Außenseite (22, 23) einer Wippe (12) anliegen.

8. Schwenkbeschlag nach Anspruch 7, **dadurch gekennzeichnet, dass** die Schenkel (30) der Feder (3) Öffnungen (90) in der Steuerscheibe (9) durchgreifen.

9. Schwenkbeschlag nach einem der vorhergehenden Ansprüche, **dadurch gekennzeichnet, dass** die maximale Schwenkbewegung zwischen der ersten Lasche (11) und der zweiten Lasche (8) einstellbar ist.

10. Schwenkbeschlag nach Anspruch 9, **dadurch gekennzeichnet, dass** ein Gehäuse (1) vorgesehen ist, an dem Anschläge (5) zur Begrenzung der Schwenkbewegung der ersten Lasche (11) relativ zu der zweiten Lasche (8) montiert sind.

11. Schwenkbeschlag nach Anspruch 9 oder 10, **dadurch gekennzeichnet, dass** mindestens ein Kerbnagel (5) in einer Öffnung an dem Gehäuse (1) zur Ausbildung eines verstellbaren Anschlages montiert ist.

12. Schwenkbeschlag nach Anspruch 9 oder 10, **dadurch gekennzeichnet, dass** das Gehäuse (1) zur Ausbildung eines Anschlages mit einer nach innen gerichteten Profilierung versehen ist.

13. Schwenkbeschlag nach einem der Ansprüche 1 bis 12, **dadurch gekennzeichnet, dass** die Wippen (12) an einer Klinkenplatte (6) schwenkbar gelagert sind, die mit einer Lasche (8) gekoppelt ist.

14. Schwenkbeschlag nach Anspruch 13, **dadurch gekennzeichnet, dass** die Klinkenplatte (6) relativ zu der Steuerscheibe (9) in einem gewissen Winkelbereich zum Umschalten der Wippen (12) drehbar ist.

15. Schwenkbeschlag nach einem der Ansprüche 1 bis 14, **dadurch gekennzeichnet, dass** der Klinkenmechanismus zwei Klinken (112, 112') umfasst, die wahlweise in Eingriff mit einer Zahnscheibe (172) stehen und eine Klinke (112) eine Drehung der Zahnscheibe in eine erste Richtung freigibt und in eine gegenläufige zweite Richtung sperrt und die andere Klinke (112') eine Drehung der Zahnscheibe (172) in die erste Richtung sperrt und in die gegenläufige zweite Richtung freigibt.

16. Schwenkbeschlag nach Anspruch 15, **dadurch gekennzeichnet, dass** die Klinken (112, 112') wahlweise durch eine Steuerscheibe (109) in Eingriff mit dem der Zahnscheibe (172) bringbar sind.

17. Schwenkbeschlag nach Anspruch 15 oder 16, **dadurch gekennzeichnet, dass** die Steuerscheibe (109) ein Langloch (191) aufweist, in dem ein Mitnehmer (173) eingreift, und der Mitnehmer bei Erreichen eines Endes des Langloches (191) die Steuerscheibe (109) verstellt.

18. Schwenkbeschlag nach einem der Ansprüche 15 bis 17, **dadurch gekennzeichnet, dass** die Klinken (112, 112') über einen Abstandshalter (190) benachbart zu einem verzahnten Bereich auf einen Mindestabstand gehalten sind.

19. Schwenkbeschlag nach Anspruch 18, **dadurch gekennzeichnet, dass** eine Klinke (112, 112') über eine Kontaktfläche an dem Abstandshalter (190) außer Eingriff mit der Zahnscheibe (172) gehalten ist, wobei die Kontaktfläche jeweils im wesentlichen tangential an der Steuerscheibe (109) angeordnet ist.

20. Schwenkbeschlag nach Anspruch 18 oder 19, **dadurch gekennzeichnet, dass** die mit der Zahnscheibe (172) in Eingriff befindliche Klinke (112, 112') an einer Anlagefläche an dem Abstandshalter (190) anliegt, wobei diese Anlagefläche im wesentlichen radial zu der Steuerscheibe (109) ausgerichtet ist.

21. Schwenkbeschlag nach einem der Ansprüche 15 bis 20, **dadurch gekennzeichnet, dass** die Laschen (108, 111) zwischen zwei Endstellungen relativ zueinander drehbar sind, wobei ein Endanschlag jeweils durch eine Klinke (112, 112') bereitgestellt wird, die nach dem Umstellen durch die Steuerscheibe (109) in Eingriff mit der Zahnscheibe (172) gehalten ist.

22. Schwenkbeschlag nach einem der Ansprüche 15 bis 21, **dadurch gekennzeichnet, dass** die die Klinken (112, 112') über eine Feder (103) zu der Zahnscheibe (172) hin vorgespannt sind.

23. Schwenkbeschlag nach einem der Ansprüche 15 bis 22, **dadurch gekennzeichnet, dass** die die Klinken (112, 112') jeweils an einer Achse (110) an der ersten Lasche (111) drehbar gelagert sind.

24. Schwenkbeschlag nach einem der Ansprüche 15 bis 23, **dadurch gekennzeichnet, dass** die Steuerscheibe (109) für eine Veränderung des Verstellweges der Laschen (108, 111) auswechselbar ist.

## Claims

1. A pivot fitting, in particular for furniture, having a first tab (11; 111) and a second tab (8; 108), situated so that it is pivotable to the first tab (11; 111), which are connected to one another via a latch mechanism (12, 19; 112, 172) and are lockable in different angular positions, **characterized in that** the latch mechanism (12, 19; 112, 172) allows locking in opposing directions, wherein the first tab (11;111) is pivotable in a first direction in relation to the second tab (8; 108), and is lockable in a plurality of sequential angular positions, and the latch mechanism (12, 19; 112, 172) may be changed over in a final position, and the first tab (11; 111) is pivotable in a second direction opposite to the first direction and is lockable at a plurality of sequential angular positions.

2. The pivot fitting according to Claim 1, **characterized in that** the latch mechanism comprises at least one rocker (12), which, in a first position, blocks the movement of the first tab (11) in relation to the second tab in a first direction and, in a second position, blocks the movement of the first tab (11) in relation to the second tab (8) in a second direction opposite to the first direction.

3. The pivot fitting according to Claim 2, **characterized in that** the at least one rocker (12) is mounted so that it is pivotable and is pre-tensioned using a spring (3) in the first or second position.

4. The pivot fitting according to Claim 2 or 3, **characterized in that** the at least one rocker (12) has two toothed sections (20, 21) situated spaced apart from one another, which may each be engaged with teeth (19) of a sprocket.

5. The pivot fitting according to one of Claims 1 to 4, **characterized in that** the latch mechanism has a control disc (9), by the means of which the at least one rocker (12) is pivotable from a first position into a second position.

6. The pivot fitting according to one of Claims 1 to 5, **characterized in that** two pivotable rockers (12) are provided, which are pre-tensioned in the first or second position via a spring (3).

7. The pivot fitting according to Claim 6, **characterized in that** the spring (3) has two legs (30), which each press against one exterior side (22, 23) of a rocker (12).

8. The pivot fitting according to Claim 7, **characterized in that** the legs (30) of the spring (3) penetrate openings (90) in the control disc (9).

9. The pivot fitting according to one of the preceding claims, **characterized in that** the maximum pivot movement between the first tab (11) and the second tab (8) is settable.

10. The pivot fitting according to Claim 9, **characterized in that** a housing (1) is provided on which stops (5) are mounted for limiting the pivot movement of the first tab (11) in relation to the second tab (8).

11. The pivot fitting according to Claim 9 or 10, **characterized in that** at least one grooved pin (5) is mounted in an opening on the housing (1) to implement an adjustable stop.

12. The pivot fitting according to Claim 9 or 10, **characterized in that** the housing (1) is provided with an inwardly directed profile for implementing a stop.

13. The pivot fitting according to one of Claims 1 to 12, **characterized in that** the rockers (12) are mounted so that they are pivotable on a latch plate (6), which is coupled to a tab (8).

14. The pivot fitting according to Claim 13, **characterized in that** the latch plate (6) is rotatable in relation to the control disc (9) in a certain angular range upon changeover of the rockers (12).

15. The pivot fitting according to one of Claims 1 to 14, **characterized in that** the latch mechanism comprises two latches (112, 112'), which are alternately engaged with a toothed disc (172) and one latch (112) releases a rotation of the toothed disc in a first direction and blocks it in an opposing second direction and the other latch (112') blocks a rotation of the toothed disc (172) in the first direction and releases it in the opposing second direction.

16. The pivot fitting according to Claim 15, **characterized in that** the latches (112, 112') may alternately be engaged with the toothed disc (172) by a control disc (109).

17. The pivot fitting according to Claim 15 or 16, **characterized in that** the control disc (109) has an oblong hole (191), in which a driver (173) engages, and the driver adjusts the control disc (109) upon reaching one end of the oblong hole (191).

18. The pivot fitting according to one of Claims 15 to 17, **characterized in that** the latches (112, 112') are held at a minimum distance via a spacer (190) adjacent to a toothed area.

19. The pivot fitting according to Claim 18, **characterized in that** a latch (112, 112') is held disengaged from the toothed disc (172) via a contact surface on the spacer (190), the contact surface being situated essentially tangentially on the control disc (109).

20. The pivot fitting according to Claim 18 or 19, **characterized in that** the latch (112, 112') engaged with the toothed disc (172) presses against a support surface on the spacer (190), this support surface being oriented essentially radially to the control disc (109).

21. The pivot fitting according to one of Claims 15 to 20, **characterized in that** the tabs (108, 111) are rotatable in relation to one another between two final positions, one final stop being provided by each latch (112, 112'), which is held engaged with the toothed disc (172) after the changeover by the control disc (109).

22. The pivot fitting according to one of Claims 15 to 21, **characterized in that** the latches (112, 112') are pre-tensioned toward the toothed disc (172) via a spring (103).

23. The pivot fitting according to one of Claims 15 to 22, **characterized in that** the latches (112, 112') are each mounted so they are rotatable on one axis (110) on the first tab (111).

24. The pivot fitting according to one of Claims 15 through 23, **characterized in that** the control disc (109) is replaceable for a change of the adjustment distance of the tabs (108, 111).

## Revendications

1. Ferrure pivotante, en particulier pour un meuble, comprenant une première languette (11, 111) et une seconde languette (8, 108) montée pivotante par rapport à la première languette (11, 111) qui sont reliées l'une à l'autre par l'intermédiaire d'un mécanisme à cliquets (12, 19, 112, 172), et peuvent être encliquetées dans différentes positions angulaires,
**caractérisée en ce que**
le mécanisme à cliquets (12, 19, 112, 172) permet une encliquetage dans des directions opposées, la première languette (11, 111) étant susceptible de pivoter dans une première direction par rapport à la seconde languette (8, 108) et pouvant ainsi être encliquetée dans plusieurs positions angulaires successives, et le mécanisme à cliquets (12, 19, 112, 172) pouvant être commuté dans une position d'extrémité, et la première languette (11, 111) étant susceptible de pivoter dans une seconde direction opposée à la première direction et pouvant être encliquetée dans plusieurs positions angulaires successives.

2. Ferrure pivotante conforme à la revendication 1,
**caractérisée en ce que**
le mécanisme à cliquets comprend au moins une bascule (12) qui dans une première position bloque le déplacement de la première languette (11) par rapport à la seconde languette dans une première direction et qui dans une seconde position bloque le déplacement de la première languette (11) par rapport à la seconde languette (8) dans une seconde direction opposée à la première direction.

3. Ferrure pivotante conforme à la revendication 2,
**caractérisée en ce que**
la bascule (12) est montée pivotante et est précontrainte au moyen d'un ressort (3) dans la première ou la seconde position.

4. Ferrure pivotante conforme à la revendication 2 ou 3,
**caractérisée en ce que**
la bascule (12) comporte deux segments dentés (20, 21) situés à distance l'un de l'autre qui peuvent être respectivement mis en prise avec une denture (19) d'une couronne dentée.

5. Ferrure pivotante conforme à l'une des revendications 1 à 4,
**caractérisée en ce que**
le mécanisme à cliquets comprend un disque de commande (9) au moyen duquel la bascule (12) peut être déplacée par pivotement d'une première position dans une seconde position.

6. Ferrure pivotante conforme à l'une des revendications 1 à 5,
**caractérisée en ce que**
il est prévu deux bascules pivotantes (12) qui sont précontraintes par un ressort (3) dans la première ou dans la seconde position.

7. Ferrure pivotante conforme à la revendication 6,
**caractérisée en ce que**
le ressort (3) comprend deux branches (30) qui s'appliquent respectivement sur une face externe (22, 23) d'une bascule (12).

8. Ferrure pivotante conforme à la revendication 7,
**caractérisée en ce que**
les branches (30) du ressort (3) viennent en prise au travers d'ouvertures (90) du disque de commande (9).

9. Ferrure pivotante conforme à l'une des revendications précédentes,
**caractérisée en ce que**
le mouvement de pivotement maximum entre la première languette (11) et la seconde languette (8) est réglable.

10. Ferrure pivotante conforme à la revendication 9,
**caractérisée en ce qu'**
il est prévu un boîtier (1) sur lequel sont montées des butées (5) pour permettre de limiter le mouvement de pivotement de la première languette (11) par rapport à la seconde languette (8).

11. Ferrure pivotante conforme à la revendication 9 ou 10,
**caractérisée en ce qu'**
au moins un clou cannelé (5) est monté dans une ouverture du boîtier (1) pour former une butée réglable.

12. Ferrure pivotante conforme à la revendication 9 ou 10,
**caractérisée en ce que**
le boîtier (1) est muni d'un profilage dirigé vers l'intérieur pour former une butée.

13. Ferrure pivotante conforme à l'une des revendications 1 à 12,
**caractérisée en ce que**
les bascules (12) sont montées pivotantes sur une plaque à cliquets (6) qui est accouplée à une languette (8).

14. Ferrure pivotante conforme à la revendication 13,
**caractérisée en ce qu'**
la plaque à cliquets (6) est mobile en rotation relativement au disque de commande (9) dans une plage angulaire déterminée pour permettre la commutation de la bascule (12).

15. Ferrure pivotante conforme à l'une des revendications 1 à 14,
**caractérisée en ce que**
le mécanisme à cliquets comprend deux cliquets (112, 112') qui sont sélectivement en prise avec un disque denté (172) et un cliquet (112) libère la rotation du disque denté dans une première direction et la bloque dans une seconde direction opposée à celle-ci et l'autre cliquet (112') bloque la rotation du disque denté (172) dans la première direction et la libère dans la seconde direction opposée à celle-ci.

16. Ferrure pivotante conforme à la revendication 15,
**caractérisée en ce que**
les cliquets (112, 112') peuvent sélectivement être mis en prise avec le disque denté (172) par l'intermédiaire d'un disque de commande (109).

17. Ferrure pivotante conforme à la revendication 15 ou 16,
**caractérisée en ce que**
le disque de commande (109) comprend un trou oblong (191) dans lequel vient en prise un élément d'entraînement (173) et cet élément d'entraînement déplace le disque de commande (109) lorsqu'a été atteinte une extrémité du trou oblong (191).

18. Ferrure pivotante conforme à l'une des revendications 15 à 17,
**caractérisée en ce que**
les cliquets (112, 112') sont maintenus par un élément d'écartement (190) à une distance minimum au voisinage d'une zone dentée.

19. Ferrure pivotante conforme à la revendication 18,
**caractérisée en ce qu'**
un cliquet (112, 112') est maintenu par une surface de contact de l'élément d'écartement (190) hors de prise avec le disque denté (172), la surface de contact étant respectivement située essentiellement tangentielle sur le disque de commande (109).

20. Ferrure pivotante conforme à la revendication 18 ou 19,
**caractérisée en ce que**
le cliquet (112, 112') en prise avec le disque denté (172) s'applique sur une surface d'appui de l'élément d'écartement (190), cette surface d'appui étant orientée essentiellement radialement par rapport au disque de commande (109).

21. Ferrure pivotante conforme à l'une des revendications 15 à 20,
**caractérisée en ce que**
les languettes (108, 111) sont mobiles en rotation l'une par rapport à l'autre entre deux positions d'extrémité, une butée d'extrémité étant respectivement définie par un cliquet (112, 112') qui, après déplacement, est maintenu en prise avec le disque denté (172) par le disque de commande (109).

22. Ferrure pivotante conforme à l'une des revendications 15 à 21,
**caractérisée en ce que**
les cliquets (112, 112') sont précontraints par un ressort (103) vers le disque denté (172).

23. Ferrure pivotante conforme à l'une des revendications 15 à 22,
**caractérisée en ce que**
les cliquets (112, 112') sont respectivement montés mobiles en rotation sur un axe (110) de la première languette (111).

24. Ferrure pivotante conforme à l'une des revendications 15 à 23,
**caractérisée en ce que**
le disque de commande (109) peut être changé pour permettre de modifier la course de réglage des languettes (108, 111).
